# EUROPEAN PATENT SPECIFICATION

(11) **EP 4 307 468 B1**
(45) Date of publication and mention of the grant of the patent: **02.12.2026**
(21) Application number: 22766966.0
(22) Date of filing: 02.03.2022
(51) Int. Cl.: H01Q 1/12, F16H 35/16, F16H 37/02, F16H 37/04, G01S 7/03, H01Q 3/34

(54) **ROTATION MECHANISM AND ANTENNA APPARATUS**
DREHMECHANISMUS UND ANTENNENVORRICHTUNG
MÉCANISME DE ROTATION ET DISPOSITIF D'ANTENNE

(30) Priority: 09.03.2021 JP 2021037837
(43) Date of publication of application: 17.01.2024
(73) Proprietor: MITSUBISHI ELECTRIC CORPORATION, Chiyoda-ku Tokyo 100-8310 (JP)
(72) Inventor: ARITAKE, Hiroshi, Tokyo 100-8310 (JP)
(74) Representative: Mewburn Ellis LLP
(86) International application number: PCT/JP2022/008963
(87) International publication number: WO 2022/191007

(56) References cited:
- WO-A1-2013/019161
- WO-A1-2015/133575
- CN-A- 110 690 550
- JP-A- 2016 011 931
- JP-A- H05 168 198
- JP-A- H08 321 713
- JP-A- H10 184 852

## Description

### Field

The present invention relates to an antenna apparatus rotation mechanism adapted to achieve synchronous rotations about two rotation axes obliquely intersecting with each other.

### Background

There is a rotation mechanism that causes objects to rotate about two rotation axes obliquely intersecting with each other. The rotation mechanism causes a rotation about one rotation axis by one motor to coordinate with a rotation about the other rotation axis by the other motor. For example, an antenna for radar is mounted on such a rotation mechanism. A rotation of the antenna about one of the two rotation axes provides broadened coverage of the antenna. Additionally, when the antenna is rotated about the one rotation axis in coordination with the rotation about the other rotation axis, an up-down direction of the antenna, that is, a polarization direction of a radio wave to be transmitted and received is maintained without depending on the rotations about the two axes. As described above, since the two motors are driven such that the rotations about the two rotation axes coordinate with each other, a target detection performance of the antenna is improved as compared with an antenna in which the polarization direction varies with the rotations.

Regarding a configuration for achieving coordinated rotations about two rotation axes obliquely intersecting with each other, Patent Literature 1 discloses a configuration in which a combination of one motor that causes an object to rotate about one rotation axis and a sensor that detects a rotation angle of the object and a combination of the other motor that causes an object to rotate about the other rotation axis and a sensor that detects a rotation angle of the object are separately provided to independently control the rotations about the two rotation axes.

### Citation List

### Patent Literature

Patent Literature 1: Japanese Patent No. 3699050
Patent Literature 2: WO2013019161-A1 discloses a system with an anti-cable twisting mechanism and a method of orientating a movable member in a system for tracking a target.
Patent Literature 3: WO 2015/133575 A1 discloses a radar device with an opening surface that includes an element antenna and a phase shifter; an antenna phase control unit that sets the phase of the phase shifter and calculates a phase amount on the basis of the directional orientation of a beam and the rotation angle of the opening surface; a rotation mechanism that rotates the opening surface; an antenna drive control unit that sets the rotation angle of the rotation mechanism; a resolver that detects the rotation angle of the opening surface; an exciter that generates a transmission signal; a radar receiver that processes a received signal; a signal processing unit that detects a target from the radar receiver, sets the rotation angle of the opening surface and the directional orientation of the beam in the antenna drive control unit and the antenna phase control unit, and calculates the competing clutter level using an antenna pattern to determine the validity of the rotation angle; and a pattern calculation unit that calculates the antenna pattern from the rotation angle of the opening surface and the directional orientation of the beam.

### Summary

### Technical Problem

However, according to the configuration disclosed in Patent Literature 1, when one of the motors or one of the sensors included in the rotation mechanism fails, the coordinated rotations about the two rotation axes are not achieved. Additionally, the number of electric drive mechanisms such as a motor and a sensor increases as compared with a rotation mechanism for achieving a rotation about one axis. Thus, a possibility of failure increases, and reliability decreases.

Furthermore, in the case of causing the rotation about one rotation axis and the rotation about the other rotation axis to coordinate with each other, rotational directions about the rotation axes are made opposite to each other, and rotation angles of the rotations about the rotation axes are offset from each other, thus maintaining the up-down direction of the antenna. However, since the two rotation axes obliquely intersect with each other, depending on the angle of the rotation about the one rotation axis, a deviation (crossing angle) occurs between a polarization plane in the up-down direction of the antenna and a polarization plane in a vertical direction.

The present invention has been made in view of the above problems and aims to provide an antenna apparatus rotation mechanism capable of reducing a deviation in a direction of an object with respect to a rotation angle of a rotation about one rotation axis while improving reliability.

### Solution to Problem

The invention is set out in the appended claims.

### Advantageous Effects of Invention

According to the present invention, it is possible to provide an antenna apparatus rotation mechanism capable of reducing a deviation in a direction of an object with respect to a rotation angle of a rotation about one rotation axis while improving reliability.

### Brief Description of Drawings

FIG. 1 is a plan view of a rotation mechanism according to a first embodiment.
FIG. 2 is a sectional view illustrating a cross section taken in the direction of arrows II-II illustrated in FIG. 1.
FIG. 3 is a partially enlarged view of a portion A illustrated in FIG. 2.
FIG. 4 is a diagram schematically illustrating gears accommodated in a gearbox illustrated in FIG. 3.
FIG. 5 is a diagram illustrating a roll angle and a direction of an antenna when the antenna is rotated by the rotation mechanism according to the first embodiment.
FIG. 6 is a diagram illustrating a relationship between an inclination and a roll angle obtained by Formula (1).
FIG. 7 is a plan view of a rotation mechanism according to a second embodiment.
FIG. 8 is a diagram illustrating an installation example of the rotation mechanism according to the second embodiment.
FIG. 9 is a view of the rotation mechanism illustrated in FIG. 8 as viewed from an antenna surface side.
FIG. 10 is a sectional view illustrating a cross section taken in the direction of arrows X-X illustrated in FIG. 7.
FIG. 11 is a partially enlarged view of a portion B illustrated in FIG. 10.
FIG. 12 is a diagram schematically illustrating gears accommodated in a gearbox illustrated in FIG. 11.
FIG. 13 is a sectional view illustrating a cross section taken in the direction of arrows XIII-XIII illustrated in FIG. 12.
FIG. 14 is a diagram illustrating a relationship between rotation angles of synchronization gears that are non-circular gears and a difference in rotation angles between the synchronization gears.

### Description of Embodiments

Hereinafter, a rotation mechanism and an antenna apparatus according to embodiments will be described in detail with reference to the drawings.

### First Embodiment.

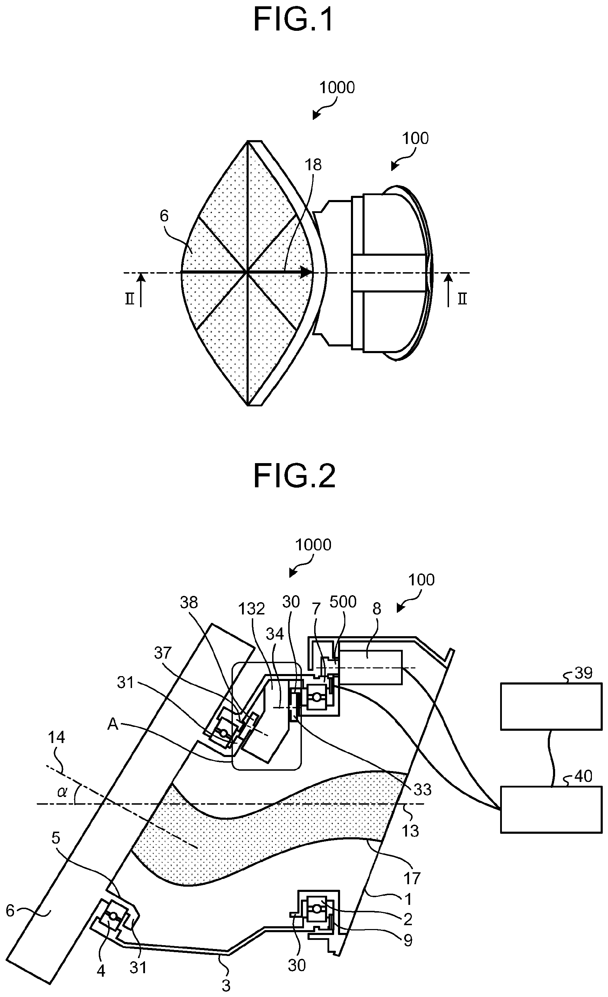

First, a rotation mechanism and an antenna apparatus according to a first embodiment will be described. FIG. 1 is a plan view of the rotation mechanism according to the first embodiment. FIG. 2 is a sectional view illustrating a cross section taken in the direction of arrows II-II illustrated in FIG. 1.

A rotation mechanism 100 according to the first embodiment causes an antenna 6, as an object, to rotate about a roll axis 13 as a first rotation axis and an antenna axis 14 as a second rotation axis. The roll axis 13 and the antenna axis 14 are two rotation axes obliquely intersecting with each other. The roll axis 13 is one of the two rotation axes obliquely intersecting with each other. The antenna axis 14 is the other of the two rotation axes obliquely intersecting with each other.

The rotation mechanism 100 includes: a base 1; a roll-axial rotation bearing 2; a roll rotator 3; an antenna-axial rotation bearing 4; an antenna rotator 5; a roll drive gear 7; a roll drive motor 8; a roll angle sensor 9; a roll synchronization gear 30; an antenna synchronization gear 31; a gearbox 132; an angle commander 39; and a controller 40.

In the rotation mechanism 100, the antenna 6 is provided on a front surface of the antenna rotator 5, and a wiring-piping material 17 is connected to the antenna 6, thus constituting an antenna apparatus 1000. The roll drive gear 7 meshing with a pinion gear 500 of the roll drive motor 8 is a first gear. The antenna 6 constitutes, for example, an active phased array antenna or an active electronically scanned array. The wiring-piping material 17 includes: a power supply line for supplying power to the antenna 6; a signal line for transmitting or receiving a high-frequency transmission signal and a high-frequency reception signal between the antenna 6 and the base 1; and wiring or piping including a refrigerant pipe for supplying a refrigerant for cooling a heat generating portion of the antenna 6, and the like. The antenna apparatus 1000 constitutes, for example, a radar apparatus.

The base 1 rotatably supports the roll rotator 3 centering on the roll axis 13. The roll rotator 3 is a first rotator. The roll-axial rotation bearing 2 is a bearing: that includes an inner ring and an outer ring respectively fixed to the base 1 and the roll rotator 3; and that enables the roll rotator 3 to smoothly rotate.

The antenna rotator 5 is rotatably supported by the roll rotator 3 so as to be rotatable about the antenna axis 14. The antenna rotator 5 is a second rotator. The antenna-axial rotation bearing 4 is a bearing: that includes an inner ring and an outer ring respectively fixed to the antenna rotator 5 and the roll rotator 3; and that enables the antenna rotator 5 to smoothly rotate.

The antenna 6 is fixed to the antenna rotator 5. The antenna 6 rotates together with the antenna rotator 5. The antenna 6 is fixed in an orientation such that an antenna surface is perpendicular to the antenna axis 14. An upward direction 18 illustrated in FIG. 1 indicates an upward direction relative to the antenna 6 and is a first direction. In other words, the upward direction 18 is a direction perpendicular to the antenna axis 14 in the antenna rotator 5 and parallel to a plane including the roll axis 13 and the antenna axis 14 when a roll rotation angle θr is 0 and an antenna rotation angle θa is 0. The roll rotation angle θr is a rotation angle of a rotation about the roll axis 13. The antenna rotation angle θa is a rotation angle of a rotation about the antenna axis 14. The antenna 6 takes an orientation such that the upward direction 18 is oriented in the vertical direction, thus maintaining a polarization direction of a radio wave to be transmitted and received to be constant. Consequently, the antenna 6 exhibits improved detection performance without being affected by the variation in the polarization direction.

The roll drive gear 7 is a gear formed coaxially with the roll-axial rotation bearing 2 and fixed to the roll rotator 3. The roll drive motor 8 includes the pinion gear 500 that meshes with the roll drive gear 7. The roll drive motor 8 is a motor that rotates the roll rotator 3 by rotating the pinion gear 500 meshing with the roll drive gear 7. The roll angle sensor 9 is an angle sensor that detects a relative angle between the roll rotator 3 and the base 1.

The angle commander 39 outputs a command value of a roll rotation angle θr. The controller 40 controls driving of the roll drive motor 8 such that the roll rotation angle θr indicated by the command value output from the angle commander 39 and the angle detected by the roll angle sensor 9 become equal to each other. The wiring-piping material 17 includes a power supply line for supplying power to the antenna 6, and a refrigerant pipe for supplying a refrigerant.

The roll synchronization gear 30 is a gear formed coaxially with the roll-axial rotation bearing 2 and fixed to the base 1. The antenna synchronization gear 31 is a gear formed coaxially with the antenna-axial rotation bearing 4 and fixed to the antenna rotator 5.

The gearbox 132 is provided between the roll synchronization gear 30 and the antenna synchronization gear 31 and accommodates therein a plurality of gears described below. The gearbox 132 is fixed to the roll rotator 3. The plurality of gears accommodated in the gearbox 132 cause the rotation of the roll rotator 3 and the rotation of the antenna rotator 5 to coordinate with each other, and the roll rotation angle θr and the antenna rotation angle θa satisfy a relationship of θr+θa=0.

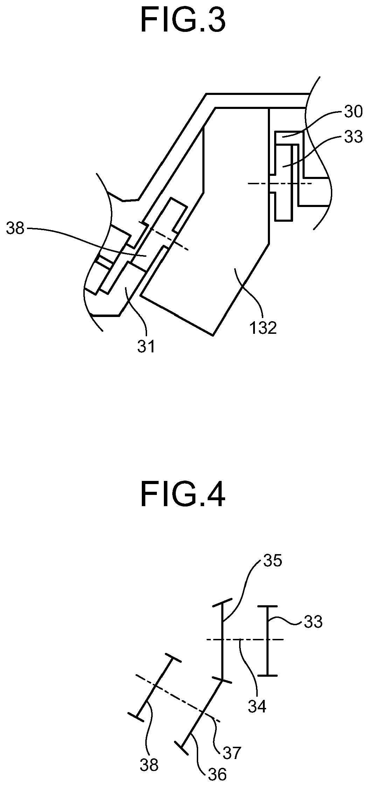

FIG. 3 is a partially enlarged view of a portion A illustrated in FIG. 2. FIG. 4 is a diagram schematically illustrating the gears accommodated in the gearbox illustrated in FIG. 3. As an example, the gearbox 132 illustrated in FIG. 3 includes, as the plurality of gears, a synchronization gear 33, a synchronization gear 35, a synchronization gear 36, and a synchronization gear 38, which are illustrated in FIGS. 3 and 4.

The synchronization gear 33 is an input-side gear and a gear that meshes with the roll synchronization gear 30. The roll synchronization gear 30 illustrated in FIGS. 2 and 3 is an internal gear. The synchronization gear 33 is a spur gear. A rotation shaft 34 is coaxially fixed to the synchronization gear 33 and is rotatably supported by the gearbox 132. The synchronization gear 35 is a gear coaxially fixed to the rotation shaft 34. The synchronization gear 35 is a bevel gear. The synchronization gears 33 and 35 are connected through the rotation shaft 34 and rotate synchronously about the rotation shaft 34.

The synchronization gear 36 is a gear that meshes with the synchronization gear 35. The synchronization gear 36 is a bevel gear. Since the synchronization gears 35 and 36 are the bevel gears, the roll axis 13 and the antenna axis 14 obliquely intersect with each other.

A rotation shaft 37 is coaxially fixed to the synchronization gear 36 and is rotatably supported by the gearbox 132. The synchronization gear 38 is a gear coaxially fixed to the rotation shaft 37. The synchronization gear 38 is a spur gear. The synchronization gears 36 and 38 are connected through the rotation shaft 37 and rotate synchronously about the rotation shaft 37. The synchronization gear 38 is an output-side gear and meshes with the antenna synchronization gear 31.

In the rotation mechanism 100 according to the first embodiment, a gear ratio of a gear train of the gearbox 132 is set such that the roll synchronization gear 30 and the antenna synchronization gear 31 have a gear ratio of 1 : 1. For example, a gear ratio between the roll synchronization gear 30 and the synchronization gear 33 is set to 10 : 1, a gear ratio between the synchronization gear 35 and the synchronization gear 36 is set to 1 : 1, and a gear ratio between the synchronization gear 38 and the antenna synchronization gear 31 is set to 1 : 10. With this gear configuration, the upward direction 18 of the antenna 6 is maintained substantially upward regardless of the roll rotation angle θr.

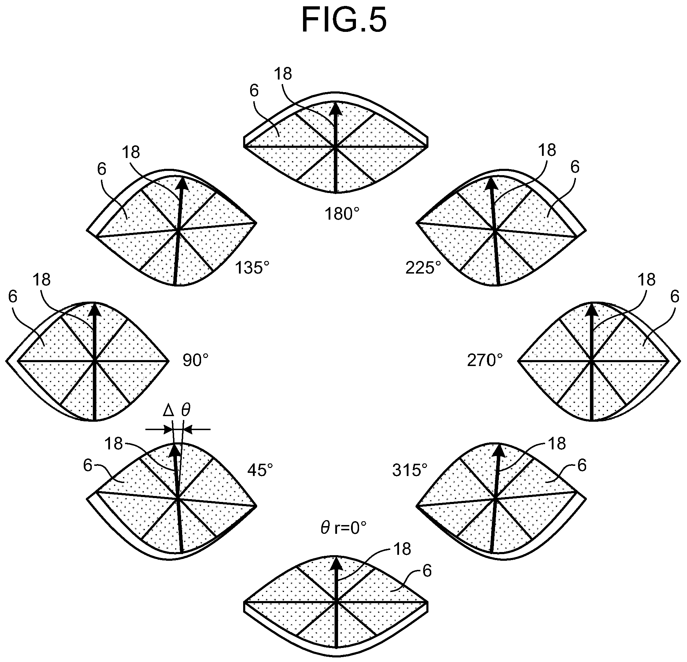

FIG. 5 is a diagram illustrating a roll angle and a direction of the antenna when the antenna is rotated by the rotation mechanism according to the first embodiment. Since the roll axis 13 and the antenna axis 14 obliquely intersect with each other, even if the rotation of the roll rotator 3 and the rotation of the antenna rotator 5 coordinate with each other so as to satisfy the relationship of θr+θa=0, as illustrated in FIG. 5, an inclination occurs in the upward direction 18 of the antenna 6 with respect to the vertical direction. In a case where an oblique angle between the roll axis 13 and the antenna axis 14 is α (see also FIG. 2), an inclination Δθ₁ from the vertical direction in the upward direction 18 of the antenna 6 is expressed by Formula (1) below. In other words, Δθ₁ represents an angle formed by the upward direction 18 at θr equal to 0 and the upward direction 18 at θr not equal to 0 when the roll rotator 3 and the antenna rotator 5 are rotated to satisfy the relationship of θr+θa=0. ${Δθ}_{1} = {tan}^{- 1} \left(tanθr/cosα\right) - θr$ (1)

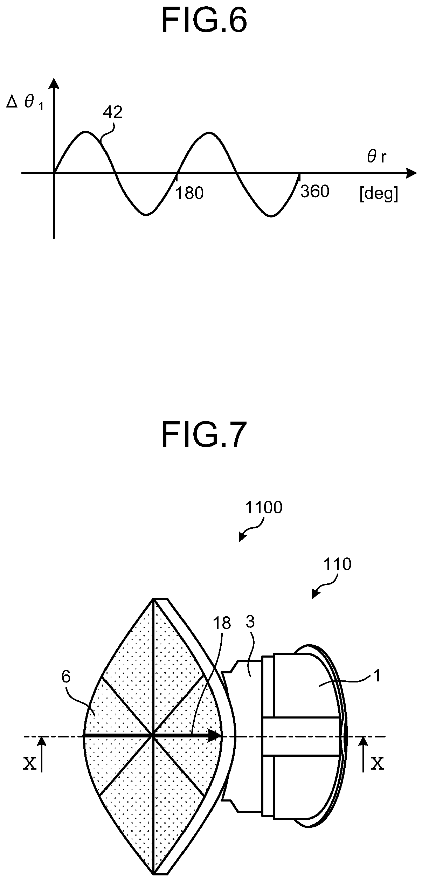

FIG. 6 is a diagram illustrating a relationship between an inclination and a roll angle obtained by Formula (1). In FIG. 6, the relationship between the inclination Δθ₁ and the roll angle θr obtained by Formula (1) is indicated by a curve 42. As illustrated in FIG. 6, the curve 42 is a curve close to a sine wave having a cycle of 2 times.

Even when drive control is performed to satisfy the relationship of θr+θa=0 as in the rotation mechanism 100 according to the first embodiment, the inclination Δθ₁ in the upward direction 18 is about 4.2° at the maximum when the oblique angle α is 30° and is about 7.6° at the maximum when the oblique angle α is 40°.

The rotation mechanism 100 according to the first embodiment includes: the base 1; the roll rotator 3 (first rotator) supported by the base so as to be rotatable about the roll axis 13 (first rotation axis); the antenna rotator 5 (second rotator) supported by the first rotator so as to be rotatable about the antenna axis 14 (second rotation axis) obliquely intersecting with the first rotation axis; the roll drive motor 8 (motor) and, for example, the pinion gear 500 that rotates the first rotator and, for example, the roll drive gear 7; the gearbox 132 (drive mechanism) that is provided to the first rotator and causes the rotation of the second rotator to coordinate with the rotation of the first rotator; and the antenna synchronization gear 31 provided to, for example, the second rotator and the roll synchronization gear 30 provided to, for example, the base 1.

Alternatively, the rotation mechanism 100 according to the first embodiment includes: the base 1;the antenna rotator 5 (second rotator) including the antenna synchronization gear 31; the roll drive motor 8 (single motor) that is fixed to the base 1 and rotates the first rotator and, for example, the pinion gear 500 meshing with the roll drive gear 7; the roll synchronization gear 30 that is fixed to the base 1; and the gearbox 132 (drive mechanism) that is fixed to the first rotator, includes the synchronization gear 33 (input-side gear) meshing with the roll synchronization gear 30, the synchronization gear 38 (output-side gear) meshing with the antenna synchronization gear 31, and the synchronization gears 35 and 36 (a plurality of gears such as bevel gears obliquely intersecting with each other) connected to each other between the input-side gear and the output-side gear, and causes the rotation of the first rotator and the rotation of the second rotator to coordinate with each other such that a rotational direction of the first rotator and a rotational direction of the second rotator are opposite to each other.

Furthermore, the antenna apparatus 1000 includes the rotation mechanism 100 and the antenna 6 that is attached to the second rotator and rotates together with the second rotator. The wiring-piping material 17 (wiring or piping) is provided between the antenna 6 and the base 1.

With such a configuration, the rotation mechanism 100 and the antenna apparatus 1000 according to the first embodiment enable, using the single roll drive motor 8, the rotation of the roll rotator 3 and the rotation of the antenna rotator 5 to coordinate with each other. Thus, it is possible to reduce the probability of occurrence of failure and improve the reliability of the rotation mechanism 100 as compared with a case of using two or more motors.

The rotation mechanism 100 and the antenna apparatus 1000 according to the first embodiment cause, using the gears that are mechanical drive mechanisms, the rotation about one rotation axis and the rotation about the other rotation axis to coordinate with each other. Thus, it is possible to reduce the number of motors and sensors and improve reliability.

In addition, the use of two or more motors involves a possibility that the deviation of the rotation becomes large and the wiring-piping material 17 is twisted and disconnected because if a failure or malfunction occurs in one of the motors, the rotation of the roll rotator 3 and the rotation of the antenna rotator 5 do not coordinate with each other. On the other hand, in the case where the use of the single roll drive motor 8 achieves the coordination between the rotation of the roll rotator 3 and the rotation of the antenna rotator 5 as in the first embodiment, the coordination between the rotation of the roll rotator 3 and the rotation of the antenna rotator 5 is maintained even if the roll drive motor 8 fails or is out of control. Thus, it is possible to prevent disconnection of the wiring-piping material 17 and improve reliability. In addition, since the coordination between the rotation of the roll rotator 3 and the rotation of the antenna rotator 5 is maintained even if the roll drive motor 8 fails or is out of control, the upward direction 18 of the antenna 6 can also be maintained. Thus, it is possible to keep the deviation in the direction of the object within a certain range with respect to the rotation angle of the rotation about one rotation axis. For example, the inclination Δθ₁ in the upward direction 18 can be controlled to: 10° or less when the oblique angle α is 45°; about 7.6° or less when the oblique angle α is 40°; and about 4.2° or less when the oblique angle α is 30°.

### Second Embodiment.

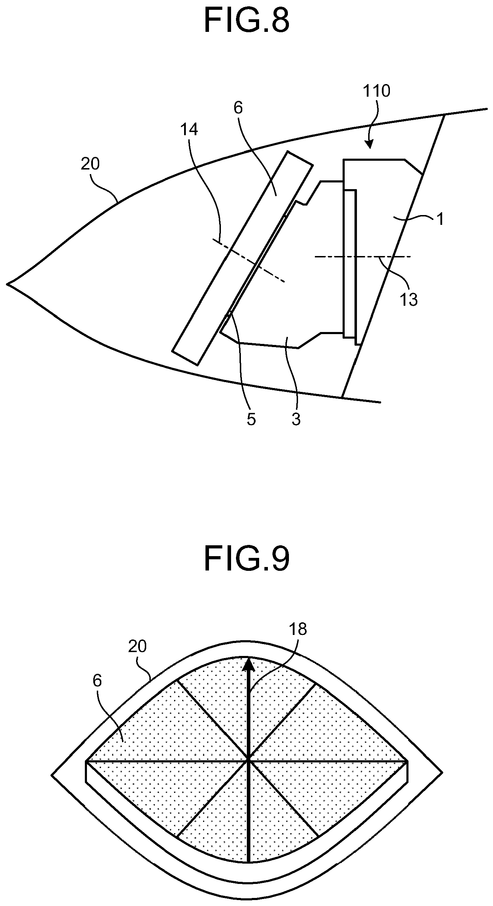

Next, a rotation mechanism and an antenna apparatus according to a second embodiment will be described. The same components as those of the first embodiment are denoted by the same reference numerals, and detailed description thereof is omitted. FIG. 7 is a plan view of the rotation mechanism according to the second embodiment. FIG. 8 is a diagram illustrating an installation example of the rotation mechanism according to the second embodiment. FIG. 9 is a view of the rotation mechanism illustrated in FIG. 8 as viewed from an antenna surface side. In a rotation mechanism 110, the antenna 6 is provided on the front surface of the antenna rotator 5, and the wiring-piping material 17 is connected to the antenna 6, thus constituting an antenna apparatus 1100. The roll drive gear 7 meshing with the pinion gear 500 of the roll drive motor 8 is the first gear. The antenna 6 constitutes an active phased array antenna or an active electronically scanned array. The wiring-piping material 17 is, for example, wiring or piping including: a power supply line for supplying power to the antenna 6; a signal line for transmitting or receiving a high-frequency transmission signal and a high-frequency reception signal between the antenna 6 and the base 1; and a refrigerant pipe for supplying a refrigerant for cooling a heat generating portion of the antenna 6. The antenna apparatus 1100 constitutes, for example, a radar apparatus.

FIG. 8 illustrates an example in which the rotation mechanism 110 having the antenna 6 fixed thereon is mounted on an aircraft nose. When mounted on the aircraft nose, the rotation mechanism 110 and the antenna 6 are accommodated in a radome 20 provided on the aircraft nose. In order to improve performance such as a detection distance of the antenna 6, it is desirable that the antenna 6 be designed to have its size as large as possible within a range not interfering with an inner wall of the radome 20. In recent aircraft fuselages in which stealthiness has been pursued, the radome 20 has often a cross section that is not circular but flat as illustrated in FIG. 9. This results in a tendency to reduce an allowable range of the inclination Δθ₁ (refer to the first embodiment) such that the antenna 6 and the inner wall of the radome 20 do not interfere with each other.

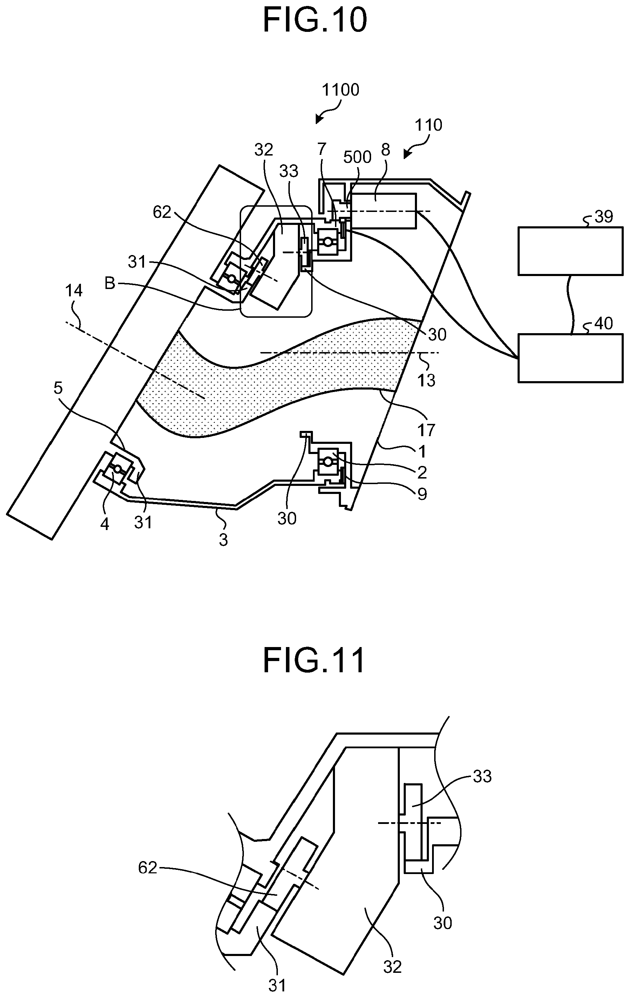

FIG. 10 is a sectional view illustrating a cross section taken in the direction of arrows X-X illustrated in FIG. 7. In the second embodiment, similarly to the first embodiment, a gearbox 32 is provided between the roll synchronization gear 30 and the antenna synchronization gear 31. However, the configuration of the gears (drive mechanisms) accommodated in the gearbox 32 is different from that of the first embodiment. The gearbox 32 is fixed to the roll rotator 3. The plurality of gears accommodated in the gearbox 32 cause the rotation of the roll rotator 3 and the rotation of the antenna rotator 5 to coordinate with each other.

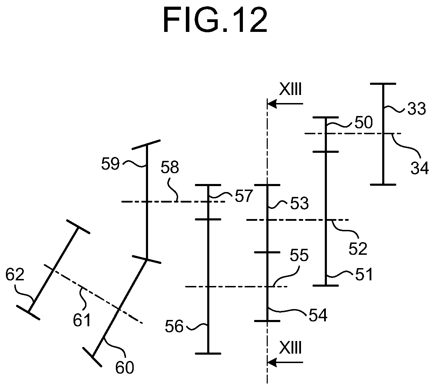

FIG. 11 is a partially enlarged view of a portion B illustrated in FIG. 10. FIG. 12 is a diagram schematically illustrating the gears accommodated in the gearbox illustrated in FIG. 11. As an example, the gearbox 32 illustrated in FIG. 11 includes, as the plurality of gears: the synchronization gear 33; a synchronization gear 50; a synchronization gear 51; a synchronization gear 53; a synchronization gear 54; a synchronization gear 56; a synchronization gear 57; a synchronization gear 59; a synchronization gear 60; and a synchronization gear 62.

The synchronization gear 33 is an input-side gear and is a fourth gear that meshes with the roll synchronization gear 30 that is a second gear. The roll synchronization gear 30 illustrated in FIGS. 10 and 11 is an external gear. The rotation shaft 34 is coaxially fixed to the synchronization gear 33 and is rotatably supported by the gearbox 32. The synchronization gear 50 is a gear coaxially fixed to the rotation shaft 34. The synchronization gear 50 is a spur gear. The synchronization gears 33 and 50 are connected through the rotation shaft 34 and rotate synchronously about the rotation shaft 34.

The synchronization gear 51 is a gear that meshes with the synchronization gear 50. The synchronization gear 51 is a spur gear. A rotation shaft 52 is coaxially fixed to the synchronization gear 51 and is rotatably supported by the gearbox 32. The synchronization gear 53 is a gear coaxially fixed to the rotation shaft 52. The synchronization gear 53 is a non-circular spur gear. The synchronization gears 51 and 53 are connected through the rotation shaft 52 and rotate synchronously about the rotation shaft 52.

The synchronization gear 54 is a gear that meshes with the synchronization gear 53. The synchronization gear 54 is a non-circular spur gear. A rotation shaft 55 is coaxially fixed to the synchronization gear 54 and is rotatably supported by the gearbox 32. The synchronization gear 56 is a gear coaxially fixed to the rotation shaft 55. The synchronization gear 56 is a spur gear. The synchronization gears 54 and 56 are connected through the rotation shaft 55 and rotate synchronously about the rotation shaft 55.

The synchronization gear 57 is a gear that meshes with the synchronization gear 56. The synchronization gear 57 is a spur gear. A rotation shaft 58 is coaxially fixed to the synchronization gear 57 and is rotatably supported by the gearbox 32. The synchronization gear 59 is a gear coaxially fixed to the rotation shaft 58. The synchronization gear 59 is a bevel gear. The synchronization gears 57 and 59 are connected through the rotation shaft 58 and rotate synchronously about the rotation shaft 58.

The synchronization gear 60 is a gear that meshes with the synchronization gear 59. The synchronization gear 60 is a bevel gear. A rotation shaft 61 is coaxially fixed to the synchronization gear 60 and is rotatably supported by the gearbox 32. Since the synchronization gears 59 and 60 are the bevel gears, the roll axis 13 and the antenna axis 14 obliquely intersect with each other.

The synchronization gear 62 is an output-side gear and is a fifth gear coaxially fixed to the rotation shaft 61. The synchronization gear 62 is a spur gear. The synchronization gear 62 meshes with the antenna synchronization gear 31 that is a third gear. The synchronization gears 60 and 62 are connected through the rotation shaft 61 and rotate synchronously about the rotation shaft 61.

The plurality of gears accommodated in the gearbox 32 cause the rotation of the roll rotator 3 and the rotation of the antenna rotator 5 to coordinate with each other.

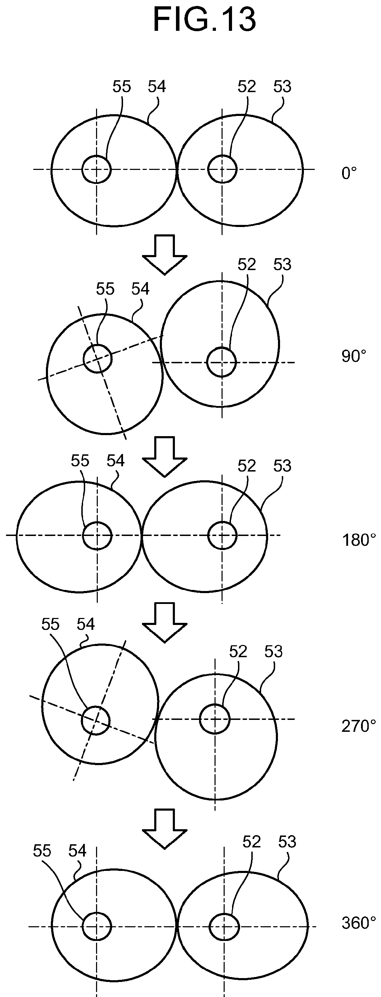

The synchronization gears 53 and 54, which are non-circular gears, are incorporated into the plurality of gears that cause the rotation of the roll rotator 3 and the rotation of the antenna rotator 5 to coordinate with each other. FIG. 13 is a sectional view illustrating a cross section taken in the direction of arrows XIII-XIII illustrated in FIG. 12. In the non-circular gears, a gear ratio between an input side and an output side changes in accordance with a rotation angle. Thus, as illustrated in FIG. 13, a rotation amount of the synchronization gear 53 and a rotation amount of the synchronization gear 54 change in accordance with the rotation angles. Herein, the angle illustrated in FIG. 13 is the rotation angle of the synchronization gear 53. Thus, the inclination Δθ₁ in the upward direction 18 of the antenna 6 illustrated in Formula (1) and FIG. 5 can be offset by adding the non-circular gears to the gear train. The non-circular gears function as transmission mechanisms that periodically vary rotation speeds of the synchronization gears 33 and 62. That is, a relationship of Δθ₁≥Δθ₂ is satisfied on condition that the rotation angles θr become equal to each other by the drive mechanisms causing the rotation of the antenna rotator 5 to coordinate with the rotation of the roll rotator 3, where Δθ₂ represents an angle formed by the upward direction 18 at θr equal to 0 and the upward direction 18 at θr not equal to 0 when the drive mechanisms cause the rotation of the antenna rotator 5 to coordinate with the rotation of the roll rotator 3.

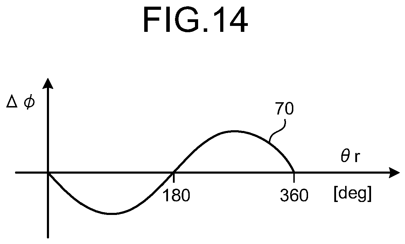

FIG. 14 is a diagram illustrating a relationship between rotation angles of the synchronization gears that are the non-circular gears and a difference in rotation angles between the synchronization gears. θr represents the rotation angle of the synchronization gear 53. Δφ represents a difference between the rotation angle of the synchronization gear 53 and the rotation angle of the synchronization gear 54. In FIG. 14, the relationship between θr and Δφ is indicated by a curve 70.

Here, the gearbox 32 is preferably downsized in consideration of a mounting space. In order to downsize the gearbox 32, a diameter of each of the gears to be accommodated in the gearbox 32 is to be reduced. For that reason, a high gear ratio of, for example, 10 times with respect to the roll axis 13 and the antenna axis 14 is used.

On the other hand, the inclination Δθ₁ in the upward direction 18 of the antenna 6 to be corrected has the cycle of 2 times as indicated by the curve 42 in FIG. 6. In order to mechanically correct the characteristic of the inclination Δθ₁ indicated by the curve 42, a gear that rotates at a gear ratio of 2 times or less with respect to the roll axis 13 is to be used. Thus, the rotation mechanism according to the second embodiment includes the gears configured in multiple stages.

For example, the gear ratio between the roll synchronization gear 30 and the synchronization gear 33 is set to 10 : 1; the gear ratio between the synchronization gear 50 and the synchronization gear 51 is set to 1 : 5; the gear ratio between the synchronization gear 53 and the synchronization gear 54 is set to about 1 : 1 (varying due to the non-circular gear); the gear ratio between the synchronization gear 56 and the synchronization gear 57 is set to 5 : 1; the gear ratio between the synchronization gear 59 and the synchronization gear 60 is set to 1 : 1; and the gear ratio between the synchronization gear 62 and the antenna synchronization gear 31 is set to 1 : 10.

The object to be rotated by the rotation mechanism 110 is not limited to the antenna 6, but for example, the object may be an imaging apparatus.

In addition, as shown in Formula (1), the curve 42 indicating the inclination Δθ₁ in the upward direction 18 of the antenna 6 is not a sine wave, and a deviation of about 0.15° at the maximum occurs in a case where the oblique angle α is 30° as compared with a sine wave having a cycle of 2 times. In a case where a deviation of 0.15° at the maximum is allowable from an aspect of performance of the antenna 6 or the like, the mechanism design can be facilitated by using a correction mechanism based on an approximation such as a sine wave having a cycle of 2 times. As described above, the present disclosure also includes a mechanism capable of reducing the inclination in the upward direction of the antenna to be equal to or less than that in the conventional technique (e.g., 1° or less).

As in the first embodiment, in the case of causing, using the gears, the rotation about one rotation axis and the rotation about the other rotation axis to coordinate with each other, rotational directions about the rotation axes are made opposite to each other, and the rotation angles of the rotations about the rotation axes are offset, thus maintaining the antenna orientation in accordance with the polarization direction. However, since the two rotation axes obliquely intersect with each other, depending on the angle of the rotation about one of the rotation axes, a deviation may occur in the direction of the antenna as the object, that is, between the polarization direction of the radio wave to be transmitted and received and the vertical direction.

To address such a situation, according to the second embodiment, in the rotation mechanism 110 and the antenna apparatus 1100, the relationship of Δθ₁≥Δθ₂ is satisfied on condition that the rotation angles θr become equal to each other by the drive mechanisms causing the rotation of the second rotator to coordinate with the rotation of the first rotator. In the relationship, θr represents the rotation angle of the first rotator, θa represents the rotation angle of the second rotator, the first direction is the direction perpendicular to the second rotation axis in the second rotator and parallel to a plane including the first rotation axis and the second rotation axis when θr is 0 and θa is 0, Δθ₁ represents the angle formed by the first direction at θr equal to 0 and the first direction at θr not equal to 0 when the first rotator and the second rotator are rotated to satisfy the relationship of θr+θa=0 in the first embodiment. Also in the relationship, Δθ₂ represents the angle formed by the first direction at θr equal to 0 and the first direction at θr not equal to 0 when the drive mechanisms cause the rotation of the second rotator to coordinate with the rotation of the first rotator. In addition, the drive mechanisms cause the rotation of the second rotator to coordinate with the rotation of the first rotator so as to correct θa in accordance with Formula (1) or an approximation of Formula (1). This can provide a rotation mechanism capable of further reducing a deviation in a direction of an object with respect to a rotation angle of a rotation about one rotation axis while improving reliability. For example, the inclination Δθ₂ in the upward direction 18 can be controlled to 1° or less.

Furthermore, the rotation mechanism 110 and the antenna apparatus 1100 according to the second embodiment include the drive mechanisms including the gearbox 32. The gearbox 32 includes the synchronization gear 62 meshing with the antenna synchronization gear 31 instead of the synchronization gear 38 according to the first embodiment, the synchronization gears 33, 50, 51, 56, and 57 (the plurality of gears such as spur gears), the synchronization gears 53 and 54 (the plurality of gears such as non-circular gears), and the synchronization gears 59 and 60 (the plurality of gears such as bevel gears obliquely intersecting with each other). The plurality of gears are connected to each other between the input-side gear and the output-side gear. In the rotation mechanism 110 and the antenna apparatus 1100, the first rotator includes the roll drive gear 7 (first gear), the roll drive motor 8 (motor) includes the pinion gear 500 meshing with the first gear, the base 1 includes the roll synchronization gear 30 (second gear), the second rotator includes the antenna synchronization gear 31 (third gear), and the drive mechanisms include synchronization gear 33 (fourth gear) meshing with the second gear, the synchronization gear 62 (fifth gear) meshing with the third gear, and the gearbox 32 (transmission mechanism) that is provided between the fourth gear and the fifth gear, and periodically varies the rotation speeds of the fourth gear and the fifth gear. The transmission mechanism may include the synchronization gears 53 and 54, which are the non-circular gears. The transmission mechanism may further include gears (the plurality of synchronization gears 50, 51, 56, and 57) that transmit the rotation amount of the first rotator to the non-circular gears at a rotation amount twice or more than the rotation amount of the first rotator.

Alternatively, the rotation mechanism 110 and the antenna apparatus 1100 may include the base 1; the roll rotator 3 (first rotator) supported by the base 1 so as to be rotatable about the roll axis 13 (first rotation axis); the antenna rotator 5 (second rotator) supported by the first rotator so as to be rotatable about the antenna axis 14 (second rotation axis) obliquely intersecting with the first rotation axis; the roll drive motor 8 (motor) and, for example, the pinion gear 500 that rotates the first rotator and, for example, the roll drive gear 7; for example the synchronization gears 33, 50, 51, 53, 54, 56, 57, 59, 60, and 62 (the plurality of gears) that are provided to the first rotator, and cause the rotation of the first rotator and the rotation of the second rotator to coordinate with each other; and the antenna synchronization gear 31 provided to, for example, the second rotator and the roll synchronization gear 30 provided to, for example, the base 1, in which the plurality of gears include the synchronization gears 53 and 54 (non-circular gears) meshing with each other.

This can provide, with a relatively simple configuration, a rotation mechanism capable of further reducing a deviation in a direction of an object with respect to a rotation angle of a rotation about one rotation axis while improving reliability.

In the example of the second embodiment, the non-circular gears are used as the transmission mechanisms that periodically vary the rotation speeds of the synchronization gears 33 and 62 in the plurality of gears that cause the rotation of the roll rotator 3 and the rotation of the antenna rotator 5 to coordinate with each other. The present disclosure includes a mechanism that can be implemented by using, as the transmission mechanisms, other transmission mechanisms including a cam mechanism, a pulley mechanism forming a transmission such as a continuously variable transmission (CVT), a link mechanism, and a planetary gear mechanism, and can correct, in accordance with Formula (1) or a waveform of a cycle of 2 times approximating Formula (1), the rotation of the second rotation axis that coordinates with the rotation of the first rotation axis. As a matter of course, the non-circular gear and another transmission mechanism may be used in combination as the transmission mechanisms. For example, as an example of the cam mechanism, the gears 53 and 54 in FIGS. 12 and 13 may include cams, and the cams may be configured to rotate while being in contact with each other in a rotational state as illustrated in FIG. 13.

The configurations described in the above embodiments are an example and may be combined with another known technique, the embodiments may be combined with each other, and some of the configurations may be changed without departing from the scope of the invention as defined in the accompanying claims.

### Reference Signs List

1 base; 2 roll-axial rotation bearing; 3 roll rotator; 4 antenna-axial rotation bearing; 5 antenna rotator; 6 antenna; 7 roll drive gear; 8 roll drive motor; 9 roll angle sensor; 13 roll axis; 14 antenna axis; 17 wiring-piping material; 18 upward direction; 20 radome; 30 roll synchronization gear; 31 antenna synchronization gear; 32, 132 gearbox; 33, 35, 36, 38, 50, 51, 53, 54, 56, 57, 59, 60, 62 synchronization gear; 34, 37, 52, 55, 58, 61 rotation shaft; 39 angle commander; 40 controller; 42, 70 curve; 100, 110 rotation mechanism; 500 pinion gear; and 1000, 1100 antenna apparatus.

## Claims

1. An antenna apparatus rotation mechanism (100, 110) comprising:
a base (1);
a first rotator (3) supported by the base (1) so as to be rotatable about a first rotation axis (13);
a second rotator (5) supported by the first rotator (3) so as to be rotatable about a second rotation axis (14) obliquely intersecting with the first rotation axis (13);
a motor (8) adapted to rotate the first rotator (3); and
a drive mechanism (32, 132) provided to the first rotator (3) and adapted to cause a rotation of the second rotator (5) to coordinate with a rotation of the first rotator (3), wherein
the first rotator (3) includes a first gear (7);
the motor (8) includes a pinion gear (500) meshing with the first gear (7); **characterized in that**
the base (1) includes a second gear (30);
the second rotator (5) includes a third gear (31); wherein
the drive mechanism (32, 132) includes:
a fourth gear (33) meshing with the second gear (30) ;
a fifth gear (62) meshing with the third gear (31); and
a transmission mechanism (32) provided between the fourth gear (33) and the fifth gear (62) and adapted to periodically vary rotation speeds of the fourth gear (33) and the fifth gear (62).

2. The antenna apparatus rotation mechanism (100, 110) according to claim 1, wherein the drive mechanism (32, 132) is adapted to cause the first rotator (3) and the second rotator (5) to coordinate with each other such that a rotational direction of the first rotator (3) and a rotational direction of the second rotator (5) are opposite to each other.

3. The antenna apparatus rotation mechanism (100, 110) according to any one of claims 1 - 2, wherein the transmission mechanism (32) includes a non-circular gear (53, 54).

4. The antenna apparatus rotation mechanism (100, 110) according to claim 3, wherein
the transmission mechanism (32) includes a gear (50, 51, 56, 57) adapted to transmit a rotation amount of the first rotator (3) to the non-circular gear (53, 54) at a rotation amount twice or more than the rotation amount of the first rotator (3).

5. The antenna apparatus rotation mechanism (100, 110) according to any one of claims 2 to 4, wherein
the transmission mechanism (32) includes any one or more of a cam mechanism, a pulley mechanism, a link mechanism, and a planetary gear mechanism.

6. The antenna apparatus rotation mechanism (100, 110) according to claim 1, wherein
the drive mechanism (33, 50, 51, 53, 54, 56, 57, 59, 60, 62) includes a gear (50, 51, 56, 57) adapted to transmit a rotation amount of the first rotator (3) to the non-circular gears (53, 54) at a rotation amount twice or more than the rotation amount of the first rotator (3).

7. An antenna apparatus (1000) comprising:
the rotation mechanism (100, 110) according to any one of claims 1 to 6; and
an antenna (6) attached to the second rotator (5) and adapted to rotate together with the second rotator (5).

8. The antenna apparatus (1000) according to claim 7, wherein
the antenna apparatus (1000) includes wiring or piping (17) between the antenna (6) and the base (1).

9. The antenna apparatus (1000) according to claim 7 or 8, wherein
the antenna (6) is an active phased array antenna or an active electronically scanned array.

## Patentansprüche

1. Antennenvorrichtung-Rotationsmechanismus (100, 110), umfassend:
eine Basis (1);
einen ersten Rotator (3), der durch die Basis (1) gelagert ist, um rund um eine erste Rotationachse (13) rotierbar zu sein;
einen zweiten Rotator (5), der durch den ersten Rotator (3) gelagert ist, um rund um eine zweite Rotationachse (14) rotierbar zu sein, die die erste Rotationachse (13) in einem schiefen Winkel schneidet;
einen Motor (8), der ausgelegt ist, um den ersten Rotator (3) zu rotieren; und
einen Antriebsmechanismus (32, 132), der an dem ersten Rotator (3) bereitgestellt und ausgelegt ist, um eine Rotation des zweiten Rotators (5) zu bewirken, um mit einer Rotation des ersten Rotators (3) zusammenzuwirken, wobei
der erste Rotator (3) ein erstes Zahnrad (7) umfasst;
der Motor (8) ein Antriebsritzel (500) umfasst, das mit dem ersten Zahnrad (7) kämmt; **dadurch gekennzeichnet, dass**:
die Basis (1) ein zweites Zahnrad (30) umfasst;
der zweite Rotator (5) ein drittes Zahnrad (31) umfasst;
wobei:
der Antriebsmechanismus (32, 132) Folgendes umfasst:
ein viertes Zahnrad (33), das mit dem zweiten Zahnrad (30) kämmt;
ein fünftes Zahnrad (62), das mit dem dritten Zahnrad (31) kämmt; und
einen Übersetzungsmechanismus (32), der zwischen dem vierten Zahnrad (33) und dem fünften Zahnrad (62) bereitgestellt und ausgelegt ist, um die Drehzahl des vierten Zahnrads (33) und des fünften Zahnrads (62) periodisch zu variieren.

2. Antennenvorrichtung-Rotationsmechanismus (100, 110) nach Anspruch 1, wobei der Antriebsmechanismus (32, 132) ausgelegt ist, um zu bewirken, dass der erste Rotator (3) und der zweite Rotator (5) miteinander zusammenwirken, sodass eine Rotationsrichtung des ersten Rotators (3) und eine Rotationsrichtung des zweiten Rotators (5) entgegengesetzt zueinander sind.

3. Antennenvorrichtung-Rotationsmechanismus (100, 110) nach einem der Ansprüche 1 bis 2, wobei der Übersetzungsmechanismus (32) ein nichtkreisförmiges Zahnrad (53, 54) umfasst.

4. Antennenvorrichtung-Rotationsmechanismus (100, 110) nach Anspruch 3, wobei:
der Übersetzungsmechanismus (32) ein Zahnrad (50, 51, 56, 57) umfasst, das ausgelegt ist, um ein Rotationausmaß des ersten Rotators (3) mit einem Rotationausmaß des Doppelten oder mehr des Rotationausmaßes des ersten Rotators (3) auf das nichtkreisförmige Zahnrad (53, 54) zu übertragen.

5. Antennenvorrichtung-Rotationsmechanismus (100, 110) nach einem der Ansprüche 2 bis 4, wobei:
der Übersetzungsmechanismus (32) einen beliebigen oder mehrere aus einem Nockenmechanismus, einem Flaschenzugmechanismus, einem Gelenkmechanismus und einem Planetengetriebemechanismus umfasst.

6. Antennenvorrichtung-Rotationsmechanismus (100, 110) nach Anspruch 1, wobei:
der Antriebsmechanismus (33, 50, 51, 53, 54, 56, 57, 59, 60, 62) ein Zahnrad (50, 51, 56, 57) umfasst, das ausgelegt ist, um ein Rotationausmaß des ersten Rotators (3) mit einem Rotationausmaß des Doppelten oder mehr des Rotationausmaßes des ersten Rotators (3) auf die nichtkreisförmigen Zahnräder (53, 54) zu übertragen.

7. Antennenvorrichtung (1000), umfassend:
einen Rotationsmechanismus (100, 110) nach einem der Ansprüche 1 bis 6; und
eine Antenne (6), die an dem zweiten Rotator (5) angebracht und ausgelegt ist, um zusammen mit dem zweiten Rotator (5) zu rotieren.

8. Antennenvorrichtung (1000) nach Anspruch 7, wobei:
die Antennenvorrichtung (1000) eine Verdrahtung oder Verrohrung (17) zwischen der Antenne (6) und der Basis (1) umfasst.

9. Antennenvorrichtung (1000) nach Anspruch 7 oder 8, wobei: die Antenne (6) eine aktive Phased-Array-Antenne oder ein Active-Electronically-Scanned-Array ist.

## Revendications

1. Mécanisme de rotation d'appareil d'antenne (100, 110), comprenant :
une base (1) ;
un premier rotateur (3) supporté par la base (1) de manière à pouvoir tourner autour d'un premier axe de rotation (13) ;
un second rotateur (5) supporté par le premier rotateur (3) de manière à pouvoir tourner autour d'un second axe de rotation (14) recoupant obliquement le premier axe de rotation (13) ;
un moteur (8) adapté pour faire tourner le premier rotateur (3) ; et
un mécanisme d'entraînement (32, 132) prévu pour le premier rotateur (3) et adapté pour amener une rotation du second rotateur (5) à se coordonner avec une rotation du premier rotateur (3), dans lequel
le premier rotateur (3) inclut un premier engrenage (7) ;
le moteur (8) comprend un pignon (500) engrenant avec le premier engrenage (7) ; **caractérisé en ce que**
la base (1) comprend un deuxième engrenage (30) ;
le deuxième rotateur (5) inclut un troisième engrenage (31) ; dans lequel
le mécanisme d'entraînement (32, 132) comprend :
un quatrième engrenage (33) engrenant avec le deuxième engrenage (30) ;
un cinquième engrenage (62) engrenant avec le troisième engrenage (31) ; et
un mécanisme de transmission (32) prévu entre le quatrième engrenage (33) et le cinquième engrenage (62) et adapté pour faire varier périodiquement les vitesses de rotation du quatrième engrenage (33) et du cinquième engrenage (62).

2. Mécanisme de rotation d'appareil d'antenne (100, 110) selon la revendication 1, dans lequel le mécanisme d'entraînement (32, 132) est adapté pour amener le premier rotateur (3) et le second rotateur (5) à se coordonner l'un avec l'autre de telle sorte qu'une direction de rotation du premier rotateur (3) et une direction de rotation du second rotateur (5) soient opposées l'une à l'autre.

3. Mécanisme de rotation d'appareil d'antenne (100, 110) selon l'une quelconque des revendications 1 à 2, dans lequel le mécanisme de transmission (32) inclut un engrenage non circulaire (53, 54).

4. Mécanisme de rotation d'appareil d'antenne (100, 110) selon la revendication 3, dans lequel
le mécanisme de transmission (32) comprend un engrenage (50, 51, 56, 57) adapté pour transmettre une quantité de rotation du premier rotateur (3) à l'engrenage non circulaire (53, 54) à une quantité de rotation de deux fois la quantité de rotation du premier rotateur (3) ou plus.

5. Mécanisme de rotation d'appareil d'antenne (100, 110) selon l'une quelconque des revendications 2 à 4, dans lequel
le mécanisme de transmission (32) comprend un ou plusieurs parmi un mécanisme à came, un mécanisme à poulie, un mécanisme de liaison et un mécanisme à engrenage planétaire.

6. Mécanisme de rotation d'appareil d'antenne (100, 110) selon la revendication 1, dans lequel
le mécanisme d'entraînement (33, 50, 51, 53, 54, 56, 57, 59, 60, 62) comprend un engrenage (50, 51, 56, 57) adapté pour transmettre une quantité de rotation du premier rotateur (3) aux engrenages non circulaires (53, 54) à une quantité de rotation de deux fois la quantité de rotation du premier rotateur (3) ou plus.

7. Appareil d'antenne (1000), comprenant :
le mécanisme de rotation (100, 110) selon l'une quelconque des revendications 1 à 6 ; et
une antenne (6) fixée au second rotateur (5) et adaptée pour tourner conjointement avec le second rotateur (5).

8. Appareil d'antenne (1000) selon la revendication 7, dans lequel
l'appareil d'antenne (1000) comprend un câblage ou une tuyauterie (17) entre l'antenne (6) et la base (1).

9. Appareil d'antenne (1000) selon la revendication 7 ou 8, dans lequel
l'antenne (6) est une antenne réseau à commande de phase active ou une antenne réseau active à balayage électronique.
